# EUROPÄISCHE PATENTSCHRIFT

(11) **EP 4 082 030 B1**
(45) Veröffentlichungstag und Bekanntmachung des Hinweises auf die Patenterteilung: **12.06.2024**
(21) Anmeldenummer: 20820837.1
(22) Anmeldetag: 04.12.2020
(51) Int. Cl.: G21D 1/00, G21F 9/04, G21F 9/34, G21F 9/28, G21F 9/12, G21C 19/32

(54) **VERFAHREN UND ANORDNUNG ZUM REINIGEN VON FLÜSSIGKEIT**
METHOD AND DEVICE FOR CLEANING A LIQUID
PROCÉDÉ ET APPAREIL POUR NETTOYER UNE LIQUIDE

(30) Priorität: 23.12.2019 DE 102019135684
(43) Veröffentlichungstag der Anmeldung: 02.11.2022
(73) Patentinhaber: Siempelkamp NIS Ingenieurgesellschaft mbH, 63755 Alzenau (DE)
(72) Erfinder: LOEB, Andreas, 61194 Niddatal (DE); THOMA, Markus, 63867 Johannesberg (DE); BECKER, Markus, 63801 Kleinostheim (DE); PRÜLLAGE, Anna, 69221 Dossenheim (DE); SCHNEIDER, Laura, 63065 Offenbach (DE)
(74) Vertreter: Stoffregen, Hans-Herbert
(86) Internationale Anmeldenummer: PCT/EP2020/084645
(87) Internationale Veröffentlichungsnummer: WO 2021/130004

(56) Entgegenhaltungen:
- EP-A1- 3 035 340
- DE-B3-102012 214 853
- DE-T2- 69 312 966

## Beschreibung

Die Erfindung bezieht sich auf ein Verfahren zum Betreiben einer Anlage, in der in einem mit Flüssigkeit gefüllten Behälter einer kerntechnischen Anlage, wie Reaktordruckbehälter oder Brennelementbecken oder Reaktorbecken, Unterwasserzerlegearbeiten durchgeführt werden, wobei die Flüssigkeit im Kreislauf geführt wird und zumindest eine Filtereinrichtung durchströmt.

Auch nimmt die Erfindung Bezug auf eine Unterwasserzerlegungsanordnung, umfassend einen mit Flüssigkeit gefüllten Behälter einer kerntechnischen Anlage, wie Reaktordruckbehälter oder Brennelementbecken oder Reaktorbecken, sowie einen den Behälter einschließenden Flüssigkeitskreislauf, in dem zumindest eine Filtereinrichtung angeordnet ist.

In kerntechnischen Anlagen können Einrichtungen unter Wasser zerlegt werden, wobei die entsprechenden Tätigkeiten üblicherweise unterstützt durch Audio- und Videotechnik fernbedient durchgeführt werden. Daher ist die Wasserqualität von wesentlicher Bedeutung, da eine Verschlechterung dieser die Zerlegetätigkeiten zumindest behindert, wenn nicht sogar unmöglich macht. Betriebsbedingt, z.B. durch Zudosierung von Zink oder Durchführung von Dekontaminationen, können sich auf den Metalloberflächen insbesondere der Primärkreissysteme Rückstände von z.B. Nickeloxalaten, Eisenoxalaten, Zinkverbindungen oder Ablagerungen wie Salze, Oxide, Crud, also schlammartige oder krustenartige Ablagerungen, befinden.

Bei der Unterwasserzerlegung können thermische Zerlegeverfahren, wie z.B. Plasmabrennschneiden, zur Anwendung gelangen. Durch die hohen Prozesstemperaturen bedingt und das Einbringen von Schneidgasen können Oberflächenbeläge reagieren und somit in das Wasser übergehen. Weiterhin können bedingt durch die hohen Prozesstemperaturen Reaktionen zwischen Schneidgas und Flüssigkeit stattfinden und die dabei entstehenden Verbindungen in das Wasser übergehen.

Des Weiteren können Metallionen, wie Eisen-, Chrom-, Nickel-, Manganionen oder Radionuklide, in erheblichen Mengen in Wasser gelöst werden, und zwar sowohl beim thermischen als auch beim mechanischen Zerlegen. Letzteres kann z.B. mittels Sägen durchgeführt werden. Darüber hinaus können gesundheitsschädliche und kanzerogen wirkende Schadstoffe, wie Chrom(VI)- und Nickelverbindungen, freigesetzt werden und in das Wasser übergehen.

Erfolgt eine Übersättigung der Lösung mit Metallionen oder Metallverbindungen, können diese als Niederschlag ausfallen, wodurch die Sicht erheblich beeinträchtigt wird, so dass die für die Unterwasserzerlegung erforderliche klare Sicht nicht mehr gegeben ist.

Die Wasserqualität wird auch häufig aufgrund der lang anhaltenden, über Wochen oder Monate dauernden Zerlegearbeiten beeinträchtigt, wenn das Wasser leicht erwärmt wird, sich viele Ionen im Wasser befinden und durch die Umwälzung Sauerstoff gelöst wird, so dass sich ein idealer Nährboden für das Wachstum von Mikroorganismen oder Algen bildet. Auch hierdurch werden die Sichtverhältnisse negativ beeinträchtigt. Ferner können sich negative Auswirkungen, wie z. B. Korrosion, auf die Zerlegewerkzeuge ergeben.

In der EP 3 035 340 A1 wird ein gattungsgemäßes Verfahren zum Entsorgen von Partikeln unter Wasser, die bei Zerlegearbeiten anfallen, beschrieben.

Der DE 90 15 427 U1 ist eine Vorrichtung zur Unterwasserzerlegung von kontaminierten Bauteilen einer kerntechnischen Anlage zu entnehmen. Bei der Zerlegung anfallende Späne und Abrieb werden in einem externen Filter abgeschieden, das in einem Flüssigkeitskreislauf angeordnet ist, in dem das Lagerbecken der kerntechnischen Anlage integriert ist.

Um eine Reinigung einer Flüssigkeit vorzunehmen, in der bestrahlte Komponenten zerlegt werden, sieht die DE 696 06 778 T2 in Reihe geschaltete Filtereinrichtungen vor, wobei zunächst mittels eines Vorfiltrierungssiebs gröbste Verunreinigungen zurückgehalten und sodann zur Feinfilterung Filterkerzen eingesetzt werden.

Die JP 2016-133 362 A bezieht sich auf ein Verfahren zum Dekontaminieren eines Wassertanks. Hierzu wird in den Wassertank ein Düsenmodul eingeführt, mittels dessen die Wandung des Tanks mit Flüssigkeit beaufschlagt wird, die aus dem Tank abgesaugt wird, um nach Durchströmen eines Zwischentanks einer Vielzahl von Filtereinheiten zugeführt zu werden, bei denen es sich um Aktivkohlefilter handeln kann. Zum Adsorbieren von Strontium wird Zeolith benutzt.

Aus der US 6,197,188 B1 ist ein Filtersystem zur Grob- und Feinfilterung bekannt. Dabei werden in einer Filtereinheit Partikel einer Größe zwischen 0,3 und 0,5 µm bzw. zwischen 15 und 50 µm herausgefiltert.

Gegenstand der DE 43 38 851 A1 ist eine Aufbereitung von kontaminierten Wässern zu Trinkwasser mittels Mikrofiltration.

Metallhaltige oder radioaktiv belastete Wässer werden nach der DE 100 05 681 A1 in einem Kreislauf geführt, wobei z.B. Radionuklide durch Kationenaustausch und Anionen durch elektrochemische Abscheidung aus dem Kreislauf entfernt werden.

Die DE 693 12 966 T2 bezieht sich auf ein Verfahren zur Auflösung von Oxiden, die auf Metallteilen abgeschieden sind. Dabei wird eine chemische Dekontamination durchgeführt, um Personen, die im Bereich eines Wassertanks eines Dampferzeugers arbeiten, starken Belastungen nicht auszusetzen.

Ein Verfahren zur Fernzerlegung bestrahlter Komponenten ist aus der DE 696 06 778 T2 bekannt.

Eine Anlage zum Behandeln eines beim Wasser-Abrasivmittel-Suspension-Strahlschneiden in einer nukleartechnischen Anlage anfallenden Gemisches aus Wasser und Feststoff wird in der DE 10 2012 214 853 B3 beschrieben.

Zur Behandlung radioaktiver Abwässer werden nach der US 2016/0211040 A1 Filter in Reihe geschaltet, bei denen es sich um elektrostatische Filter, Zeolithfilter oder Anionentauscher oder Kationentauscher handeln kann.

Um biologisch oder radioaktiv kontaminiertes Wasser, insbesondere Wasser aus Wäschereien zu reinigen, sieht die US 4,975,199 A Partikelfilter vor, um sodann diesen entnommenes Wasser einer Umkehrosmose zuzuführen.

Der vorliegenden Erfindung liegt die Aufgabe zugrunde, ein Verfahren und eine Anordnung der eingangs genannten Art so weiterzubilden, dass bei der Unterwasserzerlegung eine Beeinträchtigung der Sichtverhältnisse sowie eine Anreicherung von Schadstoffen vermieden werden.

Zur Lösung der Aufgabe wird verfahrensmäßig im Wesentlichen vorgeschlagen, dass die Flüssigkeit durch zumindest eine erste Filtereinrichtung in Form eines Grobfilters und eine zweite Filtereinrichtung durchströmt, in der zur Filterung zumindest eine Einrichtung aus der Gruppe Ionentauscher, Umkehrosmose, Ultrafiltration, Aktivkohlefilter, Zeolithfilter, biologisches Filter verwendet wird, und dass zumindest die erste und/oder die zweite Filtereinrichtung, bevorzugt sowohl die erste und die zweite Filtereinrichtung, in dem Behälter angeordnet wird bzw. werden.

Es besteht jedoch auch die Möglichkeit, dass die erste Filtereinrichtung innerhalb des Behälters und die zweite Filtereinrichtung außerhalb des Behälters angeordnet werden. Befindet sich die zweite Filtereinrichtung außerhalb des Behälters, so kann ein einfacher Austausch von Ionentauscherharzen bzw. problemlos eine Wartung der Filter der zweiten Filtereinrichtung durchgeführt werden.

Der Behälter ist Teil des Kreislaufes.

Dabei ist insbesondere vorgesehen, dass die Flüssigkeit vor Durchströmen der zweiten Filtereinrichtung die erste und eine weitere Filtereinrichtung durchströmt.

Bei der ersten Filtereinrichtung kann es sich um ein Grobfilter, wie Sandfilter oder Metallgewebefilter mit einer Filterfeinheit bzw. Porengröße zwischen 1 mm und 5 mm handeln, so dass Partikel zwischen 1 mm und 5 mm aus der im Kreislauf stammenden Flüssigkeit abgeschieden werden.

Die weitere Filtereinrichtung ist ein Feinfilter und kann z.B. eine oder mehrere Filterkerzen, wie Aktivkohlekerzen oder Wickelfilterkerzen, mit einer Filterfeinheit zwischen 1 µm und 150 µm aufweisen.

Mit anderen Worten wird erfindungsgemäß eine Wasseraufbereitung bei der Zerlegung von Einrichtungen unter Wasser durchgeführt, indem das Wasser zunächst ein Grobfilter, sodann ein Feinfilter und schließlich eine Filtereinrichtung durchströmt, bei der zumindest ein Filter aus der Gruppe Ionentauscher, Umkehrosmose, Aktivkohlefilter, Ultrafiltration, Zeolithfilter, biologisches Filter eingesetzt wird.

Dabei strömt die Flüssigkeit im Kreislauf in dem Behälter selbst. Erfindungsgemäß wird ein geschlossenes System im Behälter, also die Kreislaufführung der Flüssigkeit in dem Behälter selbst benutzt, um Partikel abzuscheiden, so dass eine Beeinträchtigung der Sichtverhältnisse beim Zerlegen unterbunden wird.

Befinden sich die Filtereinrichtungen innerhalb des Behälters, ergibt sich der zusätzliche Vorteil, dass die radioaktive Belastung außerhalb des Behälters nicht erhöht wird, da die Flüssigkeit in dem Behälter verbleibt. Schmutz und Schadstoffe werden parallel zum Zerlegeprozess entfernt. Hierdurch wird die Anreicherung von Schadstoffen in der Flüssigkeit unterbunden und eine Korrosion an Zerlegegeräten vermieden.

Bei dem Ionentauscher handelt es sich insbesondere um einen Kationentauscher oder Anionentauscher oder Kationentauscher und Anionentauscher.

Bei dem Kationentauscher sollte es sich um einen stark oder schwach sauren Kationentauscher und/oder bei dem Anionentauscher um einen stark oder schwach basischen Anionentauscher handeln.

Als Ionentauscher kommt auch ein selektiver Ionentauscher in Frage, um z.B. Li, Cs oder Radionuklide zu binden.

Durchströmt nach dem Stand der Technik die bei der Unterwasserzerlegung vorhandene Flüssigkeit zwei Filtereinrichtungen, die üblicherweise eine Grob- und eine Feinfilterung ermöglichen, die außerhalb des Behälters angeordnet und somit zu einer radioaktiven Belastung in der Umgebung des Behälters führen, so ist erfindungsgemäß vorgesehen, dass zum einen eine Reinigung der Flüssigkeit in dem Behälter selbst erfolgt und zum anderen eine spezielle Filterstufe vorgesehen ist, die sicherstellt, dass die zu einer Beeinträchtigung führenden Ionen, Mikroorganismen oder Radionuklide aus der Flüssigkeit entfernt werden, so dass eine klare Sicht gegeben ist, auch dann, wenn Zerlegearbeiten über einen langen Zeitraum, also Wochen und gegebenenfalls Monate, und/oder bei Temperaturen durchgeführt werden, die insbesondere einen Nährboden für das Wachstum von Mikroorganismen und Algen bieten.

Erfindungsgemäß wird eine Anreicherung von Schadstoffen in der Flüssigkeit vermieden. Auch eine Erhöhung der Ortsdosisleistung und Korrosion an den Zerlegeeinrichtungen wird unterbunden.

Insbesondere sieht die Erfindung vor, dass als die zweite Filtereinrichtung mehrere Ionentauscher, wie radionuklidselektiver Ionentauscher und/oder Anionentauscher und/oder Kationentauscher umfasst, die strömungstechnisch parallel und/oder in Reihe angeordnet werden.

Eine Anordnung der eingangs genannten Art zeichnet sich dadurch aus, dass in dem Kreislauf zumindest eine erste und eine zweite Filtereinrichtung angeordnet sind, dass die erste Filtereinrichtung ein Grobfilter und die zweite Filtereinrichtung eine Einrichtung aus der Gruppe Ionentauscher, Umkehrosmose, Ultrafiltration, Zeolithfilter, Aktivkohlefilter, biologisches Filter sind, und dass die erste und/oder zweite Filtereinrichtung, insbesondere die erste und die zweite Filtereinrichtung, in dem Behälter angeordnet ist bzw. sind. Insbesondere sieht die Erfindung auch vor, dass der zweiten Filtereinrichtung eine weitere Filtereinrichtung vorgeschaltet ist, wobei insbesondere die erste Filtereinrichtung ein Grobfilter und die zweite Filtereinrichtung ein Feinfilter ist.

Auch die weitere Filtereinrichtung, also das Feinfilter, sollte bzw. ist in dem Behälter angeordnet.

Alternativ besteht die Möglichkeit, dass die erste Filtereinrichtung in dem Behälter und die zweite Filtereinrichtung außerhalb des Behälters angeordnet sind. Die weitere Filtereinrichtung kann in dem Behälter oder außerhalb des Behälters angeordnet sein.

Unabhängig hiervon sollte die zweite Filtereinrichtung zumindest zwei Ionentauscher aufweisen, die strömungstechnisch in Reihe oder parallel geschaltet sind.

Bevorzugterweise weist die zweite Filtereinrichtung zumindest einen Ionentauscher aus der Gruppe radionuklidselektiver Ionentauscher, Anionentauscher, Kationentauscher auf.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden Ausführungsbeispielen.

Es zeigen:
- Fig. 1: ein erstes Ausführungsbeispiel einer Unterwasserzerlegungsanordnung und
- Fig. 2: eine zweite Ausführungsform einer Unterwasserzerlegungsanordnung.

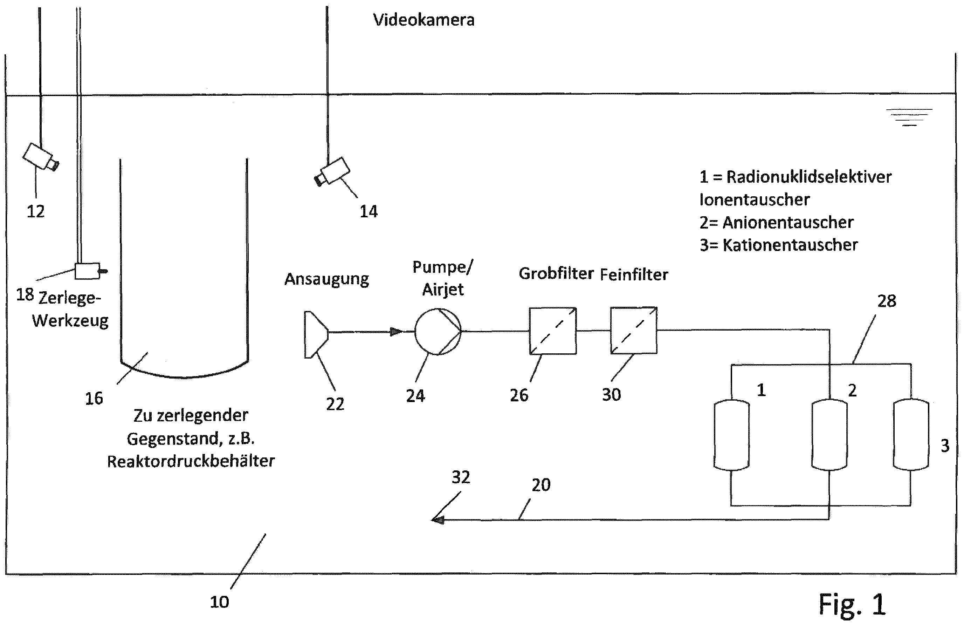

In Fig. 1 ist als erstes Ausführungsbeispiel der erfindungsgemäßen Lehre ein Abschnitt eines mit Wasser gefüllten Behälters 10 einer kerntechnischen Anlage, wie Reaktorbecken, dargestellt, in dem Unterwasserzerlegearbeiten durchgeführt werden. Diese werden u.a. durch Videotechnik fernbedient durchgeführt. Rein beispielhaft sind in der Fig. 1 zwei Videokameras 12, 14 dargestellt, die Aufnahmen eines zu zerlegenden Gegenstandes 16 liefern, der mittels eines Werkzeugs 18 zerlegt wird. Um z.B. durch Trübung des Wassers die Sicht nicht zu beeinträchtigen, damit über die von den Videokameras 12, 14 erhaltenen Aufnahmen eine problemlose Steuerung des Zerlegewerkzeugs, gegebenenfalls automatisch, erfolgen kann, durchströmt die Flüssigkeit, also das Wasser mehrere Filtereinrichtungen. Dabei wird das Wasser erfindungsgemäß innerhalb des Behälters 10 in einem Kreislauf 20 geführt.

Ein Ansaugstutzen 22 befindet sich in der Flüssigkeit, um diese über eine Pumpe 24 anzusaugen, damit die angesaugte Flüssigkeit den Kreislauf 20 durchströmen kann. In dem Kreislauf 20 sind ein Grobfilter 26 als erste Filtereinrichtung, eine zweite Filtereinrichtung 28 nachstehend beschriebener Ausführungsform sowie eine zwischen der ersten Filtereinrichtung 26 und der zweiten Filtereinrichtung 28 im Kreislauf angeordnete weitere Filtereinrichtung 30 vorgesehen, bei der es sich um ein Feinfilter handelt.

Mittels der ersten Filtereinrichtung, also des Grobfilters 26, werden Partikel einer Größe von z.B. 1 mm bis 5 mm und größer abgeschieden.

Bei dem Grobfilter 26 handelt es sich insbesondere um einen Siebzylinder, Metallgewebefilter oder um eine oder mehrere Filterkerzen oder Kombinationen mehrerer dieser Filter.

Das im Kreislauf 20 dem Grobfilter 26 nachgeordnete Feinfilter 30 sollte eine oder mehrere Feinfilterkerzen und/oder eine oder mehrere Wickelfilterkerzen, ein oder mehrere Kantenspalfilter aufweisen, um eine Feinabscheidung von Partikeln bis 150 µm zu ermöglichen.

Bei dem Feinfilter 30 kann es sich auch um ein oder mehrere Aktivkohlekerzen handeln.

Nach dem Feinfilter 30 ist in dem Kreislauf 20 die zweite Filtereinrichtung 28 angeordnet, die im Ausführungsbeispiel drei parallel geschaltete Einzelfilter umfasst, und zwar einen radionuklidselektiven Ionentauscher 1, einen Anionentauscher 2 sowie einen Kationentauscher 3. Es besteht auch die Möglichkeit ein oder mehrere der Ionentauscher z.B. durch ein Aktivkohlefilter und/oder Zeolithfilter und/oder Ultrafiltration und/oder Umkehrosmose und/oder biologisches Filter zu ersetzen oder solche ergänzend zu berücksichtigen.

Sind die Filter 1, 2, 3 im Ausführungsbeispiel parallel geschaltet, so ist eine Anordnung in Reihe oder auch eine Kombination von Parallel- und Reihenanordnung möglich.

Der Ausgang (Pfeil 32) der zweiten Filtereinrichtung 28 mündet in der Behälterflüssigkeit, wodurch sich der Kreislauf 20 ergibt.

Durch die zweite Filtereinrichtung 28 ergibt sich der Vorteil, dass sich insbesondere Metallionen, wie Eisenionen, Chromionen, Nickelionen, Manganionen, sowie Radionuklide abscheiden lassen. Auch Mikroorganismen und Schadstoffe können abgeschieden werden. Durch diese Maßnahmen werden eine Trübung des Wassers und eine Anreicherung von Schadstoffen in dem Behälter 10 vermieden.

Durch das Durchströmen insbesondere der zweiten Filtereinrichtung 28 wird eine gute Wasserqualität sichergestellt, die vermeidet, dass sich ein Nährboden für das Wachstum von Mikroorganismen oder Algen ausbilden kann.

Somit ist ein reibungsloser Zerlegebetrieb möglich.

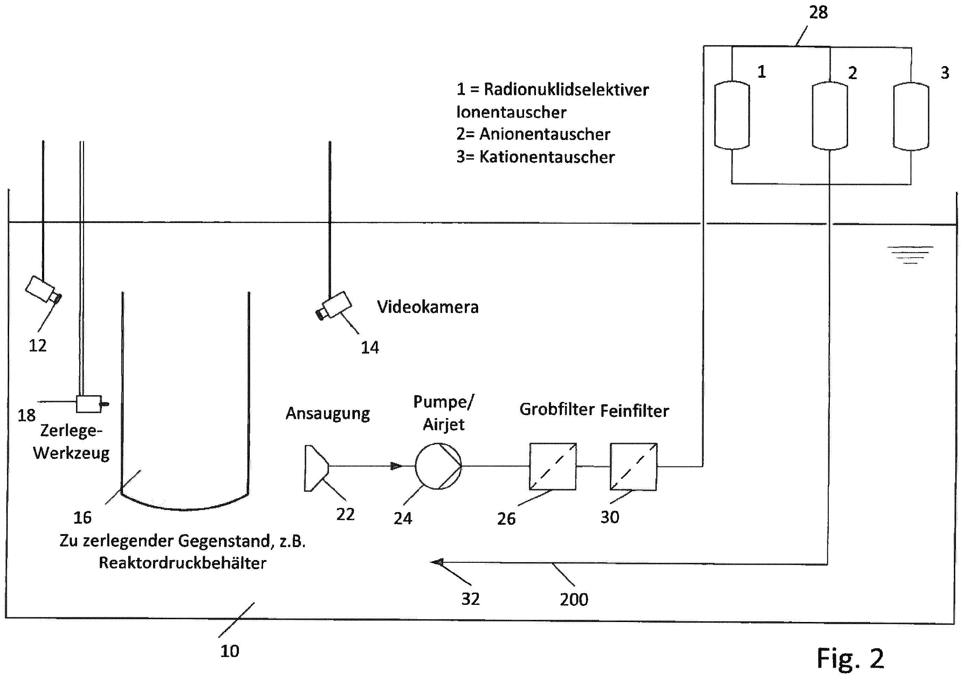

Der Fig. 2 ist ein zweites Ausführungsbeispiel zu entnehmen, das eine Anordnung zur Unterwasserzerlegung von Bauteilen, insbesondere einer kerntechnischen Anlage, zu entnehmen ist. Dabei werden entsprechend der Fig. 1 für gleiche Elemente gleiche Bezugszeichen benutzt.

Auch nach dem Ausführungsbeispiel der Fig. 2 wird die in dem Becken 10 vorhandene Flüssigkeit in einem Kreislauf 200 geführt, wobei allerdings abweichend von der Fig. 1 die erste Filtereinrichtung 26 und die weitere Filtereinrichtung 30 in dem Behälter 10 und die zweite Filtereinrichtung 28 außerhalb des Behälters 10 angeordnet sind, wie sich selbsterklärend aus der Fig. 2 ergibt. Ansonsten erfolgt eine gleiche Handhabung und ein gleicher Flüssigkeitskreislauf, um bei den Unterwasserzerlegearbeiten eine Beeinträchtigung der Sichtverhältnisse sowie eine Anreicherung von Schadstoffen in der Flüssigkeit zu vermeiden. Um dies zu erreichen, wird die Flüssigkeit über den Ansaugstutzen 22 mittels der Pumpe 24 angesaugt, damit sodann die Flüssigkeit in dem Kreislauf 200 strömen kann, in dem sich die erste Filtereinrichtung 26 und die weitere Filtereinrichtung 30 befinden, und zwar innerhalb des Behälters 10, um sodann den Kreislauf 200 aus dem Behälter 10 herauszuführen und die Flüssigkeit durch die zweite Filtereinrichtung 28 strömen zu lassen. Anschließend wird der Kreislauf in den Behälter 10 zurückgeführt. Die Arten der Filtereinrichtungen 26, 28, 30 entspricht der, die im Zusammenhang mit der Fig. 1 erläutert worden sind, so dass auf die diesbezüglichen Ausführungen verwiesen wird.

## Patentansprüche

1. Verfahren zum Betreiben einer Anlage, in der in einem mit Flüssigkeit gefüllten Behälter (10) einer kerntechnischen Anlage, wie Reaktordruckbehälter oder Brennelementbecken oder Reaktorbecken, Unterwasserzerlegearbeiten durchgeführt werden, wobei die Flüssigkeit im Kreislauf (20, 200) geführt wird und zumindest eine Filtereinrichtung (26, 28, 30) durchströmt,
**dadurch gekennzeichnet,**
**dass** die Flüssigkeit in dem Kreislauf (20, 200) zumindest eine erste Filtereinrichtung (26) in Form eines Grobfilters und eine zweite Filtereinrichtung (28) durchströmt, in der zur Filtrierung zumindest eine Einrichtung aus der Gruppe Ionentauscher (1, 2, 3), Umkehrosmose, Ultrafiltration, Aktivkohlefilter, Zeolithfilter, biologisches Filter verwendet wird, und dass die erste und/oder die zweite Filtereinrichtung in dem Behälter (10) angeordnet wird.

2. Verfahren nach Anspruch 1,
**dadurch gekennzeichnet,**
**dass** die Flüssigkeit vor Durchströmen der zweiten Filtereinrichtung (28) die erste Filtereinrichtung (26) und eine dieser nachgeordnete weitere Filtereinrichtung (30) durchströmt.

3. Verfahren nach Anspruch 1 oder 2,
**dadurch gekennzeichnet,**
**dass** als die erste Filtereinrichtung (26) ein Grobfilter, insbesondere ein Siebzylinder, Metallgewebefilter, Filterkerze, insbesondere mit einer Filterfeinheit zwischen 1 mm und 5 mm, und/oder als die weitere Filtereinrichtung (30) ein Feinfilter, insbesondere eine oder mehrere Feinfilterkerzen, Wickelfilterkerzen, Kantenspaltfilter, insbesondere mit einer Filterfeinheit zwischen 1 µm und 150 µm, verwendet werden.

4. Verfahren nach zumindest einem der vorhergehenden Ansprüche,
**dadurch gekennzeichnet,**
**dass** die zweite Filtereinrichtung (28) mehrere Ionentauscher (1, 2, 3) umfasst, die strömungstechnisch parallel und/oder in Reihe angeordnet werden.

5. Verfahren nach zumindest einem der vorhergehenden Ansprüche,
**dadurch gekennzeichnet,**
**dass** die erste Filtereinrichtung (26) innerhalb des Behälters (10) und die zweite Filtereinrichtung (28) außerhalb des Behälters angeordnet werden.

6. Unterwasserzerlegungsanordnung, umfassend einen mit Flüssigkeit gefüllten Behälter (10) einer kerntechnischen Anlage, wie Reaktordruckbehälter oder Brennelementbecken oder Reaktorbecken, sowie einen den Behälter einschließenden Flüssigkeitskreislauf (20, 200), in dem zumindest eine Filtereinrichtung (26, 28, 30) angeordnet ist,
**dadurch gekennzeichnet,**
**dass** in dem Kreislauf (20, 200) zumindest eine erste und eine zweite Filtereinrichtung (26, 28) angeordnet sind, dass die erste Filtereinrichtung (26) ein Grobfilter und die zweite Filtereinrichtung (28) eine Einrichtung aus der Gruppe Ionentauscher (1, 2, 3), Umkehrosmose, Ultrafiltration, Zeolithfilter, Aktivkohlefilter, biologisches Filter sind, und dass die erste und/oder die zweite Filtereinrichtung in dem Behälter (10) angeordnet ist oder sind.

7. Anordnung nach Anspruch 6,
**dadurch gekennzeichnet,**
**dass** in dem Kreislauf (20, 200) der zweiten Filtereinrichtung (28) eine weitere Filtereinrichtung (30) vorgeschaltet ist.

8. Anordnung nach Anspruch 6 oder 7,
**dadurch gekennzeichnet,**
**dass** die erste Filtereinrichtung (26) einen Grobfilter, insbesondere ein Siebzylinder, Metallgewebefilter, Filterkerze, insbesondere mit einer Filterfeinheit zwischen 1 mm und 5 mm, und/oder die weitere Filtereinrichtung (30) ein Feinfilter,
insbesondere eine oder mehrere Feinfilterkerzen, Wickelfilterkerzen, Kantenspaltfilter, insbesondere mit einer Filterfeinheit zwischen 1 µm und 150 µm, sind.

9. Anordnung nach zumindest einem der Ansprüche 6 bis 8,
**dadurch gekennzeichnet,**
**dass** die zweite Filtereinrichtung (28) zumindest zwei Ionentauscher (1, 2, 3) aufweist, die strömungstechnisch in Reihe oder parallel geschaltet sind.

10. Anordnung nach zumindest einem der Ansprüche 6 bis 9,
**dadurch gekennzeichnet,**
**dass** die zweite Filtereinrichtung (28) zumindest einen Ionentauscher aus der Gruppe radionuklidselektiver Ionentauscher, Anionentauscher, Kationentauscher ist oder umfasst.

11. Anordnung nach zumindest einem der Ansprüche 6 bis 10,
**dadurch gekennzeichnet,**
**dass** die erste Filtereinrichtung (26) innerhalb des Behälters (10) und die zweite Filtereinrichtung (28) außerhalb des Behälters angeordnet sind.

## Claims

1. A method for operating a system in which dismantling works are performed underwater in a liquid-filled vessel (10) of a nuclear facility, such as a reactor pressure vessel or fuel element pool or a reactor pool, wherein the liquid is guided in a circuit (20, 200) and flows through at least one filter device (26, 28, 30),
**characterized in that**
the liquid in the circuit (20, 200) flows through at least one first filter device (26) in the form of a coarse filter and one second filter device (28), in which at least one device from the group comprising ion exchangers (1, 2, 3), reverse osmosis systems, ultrafiltration systems, activated carbon filters, zeolite filters, and biological filters is used for filtration, and **in that** the first and/or the second filter device is arranged in the vessel (10).

2. The method according to claim 1,
**characterized in that**
the liquid flows through the first filter device (26) and a further filter device (30) arranged downstream thereof before flowing through the second filter device (28).

3. The method according to claim 1 or 2,
**characterized in that**
a coarse filter, particularly a perforated cylinder, wire mesh filter, or filter cartridge is used as the first filter device (26), particularly with a filter fineness between 1 mm and 5 mm, and/or a fine filter, particularly one or more fine filter cartridges, wound filter cartridges, or metal-edge filters are used as the further filter device (30), particularly with a filter fineness between 1 µm and 150 µm.

4. The method according to any of the preceding claims,
**characterized in that**
the second filter device (28) comprises several ion exchangers (1, 2, 3), which are arranged fluidically in parallel and/or in series.

5. The method according to any of the preceding claims,
**characterized in that**
the first filter device (26) is arranged within the vessel (10) and the second filter device (28) is arranged outside the vessel.

6. An underwater dismantling arrangement, comprising a liquid-filled vessel (10) of a nuclear facility, such as a reactor pressure vessel or fuel element pool or reactor pool, as well as a liquid circuit (20, 200) enclosing the vessel, in which circuit at least one filter device (26, 28, 30) is arranged,
**characterized in that**
at least one first and one second filter device (26, 28) are arranged in the circuit (20, 200), **in that** the first filter device (26) is a coarse filter, and the second filter device (28) is a device from the group comprising ion exchangers (1, 2, 3), reverse osmosis systems, ultrafiltration systems, zeolite filters, activated carbon filters, and biological filters, and **in that** the first and/or the second filter device is or are arranged in the vessel (10).

7. The arrangement according to claim 6,
**characterized in that**
a further filter device (30) is arranged upstream of the second filter device (28) in the circuit (20, 200).

8. The arrangement according to claim 6 or 7,
**characterized in that**
the first filter device (26) is a coarse filter, particularly a perforated cylinder, wire mesh filter, or filter cartridge, particularly with a filter fineness between 1 mm and 5 mm, and/or the further filter device (30) is a fine filter, particularly one or more fine filter cartridges, wound filter cartridges, or metal-edge filters, particularly with a filter fineness between 1 µm and 150 µm.

9. The arrangement according to any of claims 6 to 8,
**characterized in that**
the second filter device (28) has at least two ion exchangers (1, 2, 3), which are used fluidically in series or in parallel.

10. The arrangement according to any of claims 6 to 9,
**characterized in that**
the second filter device (28) is or comprises at least one ion exchanger from the group comprising radionuclide-selective ion exchangers, anion exchangers, or cation exchangers.

11. The arrangement according to any of claims 6 to 10,
**characterized in that**
the first filter device (26) is arranged within the vessel (10) and the second filter device (28) is arranged outside the vessel

## Revendications

1. Procédé pour exploiter une installation dans laquelle des travaux de démontage sous l'eau sont réalisés dans une cuve (10) remplie de liquide, d'une installation de technique nucléaire telle que cuve de pression de réacteur ou piscine de stockage de combustible nucléaire ou piscine de réacteur, sachant que le liquide circule dans le circuit (20, 200) et traverse au moins un dispositif à filtre (26, 28, 30).
**caractérisé en ce**
**que** le liquide dans le circuit (20, 200) traverse au moins un premier dispositif à filtre (26) sous forme de filtre grossier et un second dispositif à filtre (28) dans lequel est utilisé pour la filtration au moins un équipement du groupe des échangeurs d'ions (1, 2, 3), osmose inverse, ultrafiltration, filtre au charbon actif, filtre à zéolite, filtre biologique, et que le premier et/ou le second dispositif à filtre est disposé dans la cuve (10).

2. Procédé selon la revendication 1,
**caractérisé en ce**
**qu'**avant de traverser le second dispositif à filtre (28), le liquide traverse le premier dispositif à filtre (26) et un autre dispositif à filtre (30) en aval de celui-ci.

3. Procédé selon la revendication 1 ou 2,
**caractérisé en ce**
**qu'**est utilisé comme premier dispositif à filtre (26) un filtre grossier, notamment un cylindre perforé, un filtre en tissu métallique, une bougie filtrante, notamment avec une finesse de filtration comprise entre 1 mm et 5 mm, et/ou comme autre dispositif à filtre (30) un filtre fin, notamment une ou plusieurs bougies filtrantes fines, bougies filtrantes en rouleau, filtres à fentes pour les bords, notamment avec une finesse de filtration comprise entre 1 µm et 150 µm.

4. Procédé selon au moins l'une des revendications précédentes,
**caractérisé en ce**
**que** le second dispositif à filtre (28) comprend plusieurs échangeurs d'ions (1, 2, 3) qui sont disposés sur le plan fluidique en parallèle ou en série.

5. Procédé selon au moins l'une des revendications précédentes,
**caractérisé en ce**
**que** le premier dispositif à filtre (26) est disposé à l'intérieur de la cuve (10) et le second dispositif à filtre (28) à l'extérieur de la cuve.

6. Système de démontage sous l'eau, comprenant une cuve (10) remplie de liquide d'une installation de technique nucléaire, telle que cuve de pression de réacteur ou piscine de stockage de combustible nucléaire ou piscine de réacteur, ainsi qu'un circuit de liquide (20, 200) comprenant la cuve, dans lequel est disposé au moins un dispositif à filtre (26, 28, 30).
**caractérisé en ce**
**qu'**au moins un premier et un second dispositif à filtre (26, 28) sont disposés dans le circuit (20, 200), que le premier dispositif à filtre (26) est un filtre grossier et que le second dispositif à filtre (28) est un équipement du groupe des échangeurs d'ions (1, 2, 3), osmose inverse, ultrafiltration, filtre au charbon actif, filtre à zéolite, filtre biologique, et que le premier et/ou le second dispositif à filtre est/sont disposé(s) dans la cuve (10).

7. Système selon la revendication 6,
**caractérisé en ce**
**qu'**un autre dispositif à filtre (30) est installé en amont du second dispositif à filtre (28) dans le circuit (20, 200).

8. Système selon la revendication 6 ou 7,
**caractérisé en ce**
**que** le premier dispositif à filtre (26) est un filtre grossier, notamment un cylindre perforé, un filtre en tissu métallique, une bougie filtrante, notamment avec une finesse de filtration comprise entre 1 mm et 5 mm, et/ou que l'autre dispositif à filtre (30) est un filtre fin, notamment une ou plusieurs bougies filtrantes fines, bougies filtrantes en rouleau, filtre à fentes pour les bords, notamment avec une finesse de filtration comprise entre 1 µm et 150 µm.

9. Système selon au moins l'une des revendications 6 à 8,
**caractérisé en ce**
**que** le second dispositif à filtre (28) présente au moins deux échangeurs d'ions (1, 2, 3) qui sont branchés sur le plan fluidique en série ou en parallèle.

10. Système selon au moins l'une des revendications 6 à 9,
**caractérisé en ce**
**que** le second dispositif à filtre (28) est ou comprend au moins un échangeur d'ions appartenant au groupe des échangeurs d'ions sélecteurs de radionucléides, échangeurs d'anions, échangeurs de cations.

11. Système selon au moins l'une des revendications 6 à 10,
**caractérisé en ce**
**que** le premier dispositif à filtre (26) est disposé à l'intérieur de la cuve (10) et le second dispositif à filtre (28) à l'extérieur de la cuve.
